# EUROPÄISCHE PATENTSCHRIFT

(11) **EP 0 380 760 B1**
(45) Veröffentlichungstag und Bekanntmachung des Hinweises auf die Patenterteilung: **12.10.1994**
(21) Anmeldenummer: 89119678.4
(22) Anmeldetag: 24.10.1989
(51) Int. Cl.: F16F 13/00

(54) **Gummilager**
Elastomeric mounting
Support en caoutchouc

(30) Priorität: 03.02.1989 DE 3903230
(43) Veröffentlichungstag der Anmeldung: 08.08.1990
(73) Patentinhaber: Firma Carl Freudenberg, 69469 Weinheim (DE)
(72) Erfinder: Freudenberg, Tillman, Dr., D-6940 Weinheim (DE); Freudenberg, Ulrich, Dr., D-6945 Hirschberg (DE)

(56) Entgegenhaltungen:
- EP-A- 0 207 194
- EP-A- 0 219 786
- EP-A- 0 241 353
- EP-A- 0 248 942
- EP-A- 0 278 824
- EP-A- 0 293 726
- DE-A- 3 506 047
- GB-A- 2 135 795

## Beschreibung

Die Erfindung betrifft ein Gummilager nach dem Oberbegriff von Anspruch 1.

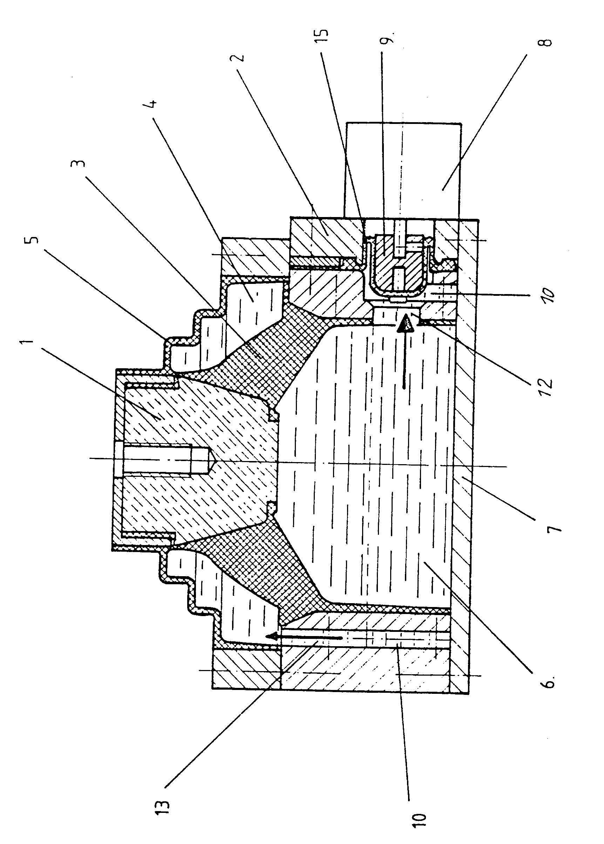

Ein solches Lager ist aus der DE-OS 35 06 047 bekannt. Die Aufgabe dieses Gummilagers wird darin gesehen, betriebsbedingt eingeleitete Schwingungen eines breiten Frequenzbereichs breitbandig zu isolieren. Das von der Verbindungsöffnung umschlossene Flüssigkeitsvolumen ist durch die Ausgestaltung des vorbekannten Gummilagers bei Einleitung von Schwingungen der zu bedämpfenden Frequenz in eine Resonanzbewegung versetzbar. Die Verbindungsöffnung ist in Figur 5 oben genannter Druckschrift trichterförmig ausgebildet, um die Dämpfungsdruckdifferenz zu reduzieren. Dazu ist es vorgesehen, daß die Verbindungsöffnungen in einen oberen, konischen Halbabschnitt und einen unteren, zylindrischen Halbabschnitt geteilt ist. Die Dämpfungsfähigkeit ist wenig befriedigend.

Ein weiteres Gummilager ist aus der DE-PS 33 16 025 bekannt. Die damit erzielte Dämpfungswirkung ist in einem relativ großen Frequenzbereich tieffrequenter Schwingungen wirksam, jedoch nur von geringer Qualität. Sie beruht auf der Ausnutzung von Verwirbelungseffekten und viskoser Reibung, welche sich bei der Hindurchpressung von Flüssigkeitsbestandteilen in der Drosselöffnung ergibt. Das Volumen dieser Flüssigkeitsbestandteile wird maßgeblich bestimmt durch den Druck, der in dem Arbeitsraum erreichbar ist. Dieser ist begrenzt durch die Ausbauchungselastizität der den Arbeitsraum in einem Teilbereich begrenzenden Tragfeder aus gummielastischem Werkstoff, welche hohlkegelig gestaltet ist.

Aus der EP-A- 0 278 824 ist ein hydraulisch dämpfendes Gummilager bekannt, das eine Arbeitskammer und eine Ausgleichskammer umfaßt, die durch eine Verbindungsöffnung innerhalb der Trennwand flüssigkeitsleitend miteinander verbunden sind. Der Durchtrittsquerschnitt durch die Verbindungsöffnung ist veränderbar, wobei die Dämpfung auf viskoser Reibung beruht, die sich durch die Hindurchpressung von Flüssigkeitsbestandteilen durch die Verbindungsöffnung ergibt.

Der Erfindung liegt die Aufgabe zugrunde, ein Gummilager der eingangs genannten Art derart weiterzuentwickeln, daß das Frequenzband, in dem eine gute Dämpfungswirkung erzielbar ist, deutlich erweitert wird und daß in einem großen Frequenzbereich tieffrequenter Schwingungen eine wesentlich verbesserte Dämpfungsarbeit erzielt werden kann.

Diese Aufgabe wird erfindungsgemäß bei einem Gummilager der eingangs genannten Art mit den kennzeichnenden Merkmalen von Anspruch 1 gelöst.

Auf vorteilhafte Ausgestaltungen nehmen die Unteransprüche Bezug.

Bei dem erfindungsgemäßen Gummilager ist die Drosselöffnung hinsichtlich ihres Durchflußquerschnitts verstellbar, wobei das Verhältnis aus dem Durchflußquerschnitt der Verbindungsöffnung und dem Durchflußquerschnitt der Drosselöffnung 2 bis 6 beträgt. Durch diese Maßnahme wird das Frequenzband, in dem eine gute Dämpfungswirkung erzielbar ist, im Vergleich zu Gummilagern ohne verstellbaren Durchflußquerschnitt deutlich erweitert. Hierdurch ergibt sich eine Dämpfungswirkung von besonders hoher Güte. Der Durchflußquerschnitt der Verbindungsöffnung ist bei der erfindungsgemäßen Ausführung durch das Vorhandensein der kalibrierten Drosselstelle im Vergleich zu Ausführungen, bei denen eine solche Drosselstelle nicht vorhanden ist relativ vergrößert. Es wird angenommen, daß maßgeblich hierauf die überraschend große Breitbandigkeit der erzielten Dämpfungswirkung zurückzuführen ist. Bevorzugt liegt das Verhältnis aus Durchflußquerschnitt der Verbindungsöffnung und Durchflußquerschnitt der Drosselöffnung zwischen 3 und 4,5.

Die Ausnutzung von Resonanzeffekten ist in Bezug auf die Dämpfung tieffrequenter Schwingungen bei Gummilagern mit hydraulischer Dämpfung allgemein bekannt. (EP-A-0027751). Die Verbindungsöffnung ist hierbei allerdings auf ihrer gesamten Länge von einem übereinstimmenden Querschnitt, wodurch sich nur in einem unzureichend engen Frequenzbereich eine gute Dämpfungswirkung erzielen läßt.

Bei der erfindungsgemäßen Ausführung ist das Verhältnis aus der Länge und dem Durchflußquerschnitt der Verbindungsöffnung ähnlich festgelegt, wie bei der vorbekannten Ausführung. Der absolute Wert des Durchflußquerschnittes ist indessen unter Gewährleistung der vorstehenden Bedingung bei Ausführungen einer ähnlichen Baugröße einerseits vergrößert, während andererseits nur im Bereich von einer engbegrenzten Engstelle eine unnachgiebig gestaltete und kalibrierte Drosselöffnung vorgesehen ist. Hierdurch ergibt sich eine gute Dämpfungswirkung in einem deutlich vergrößerten Frequenzbereich.

Es ist zwar schon bekannt, an der Mündung entsprechend wirksamer Verbindungsöffnungen bei Hülsengummifedern ein Quetschventil vorzusehen. Die hierdurch gebildete Drosselstelle ist jedoch hinsichtlich ihres Durchflußquerschnittes nachgiebig gestaltet, was eine Beeinträchtigung der erzielbaren Dämpfungsarbeit zur Folge hat.

Bei der erfindungsgemäßen Ausführung ist die Drosselöffnung demgegenüber unnachgiebig begrenzt und kalibriert, wodurch sich eine wesentlich verbesserte Dämpfungsarbeit in einem Frequenzbereich von optimaler Breite ergibt.

Als besonders vorteilhaft hat es sich erwiesen, wenn die Drosselöffnung die Form und Gestalt einer Blende hat und hinsichtlich ihres Durchlaßquerschnitts stufenlos zwischen einem Kleinst- und einem Größtmaß verstellbar ist. Die Anpaßbarkeit an die während der bestimmungsgemäßen Verwendung eingeleiteten Schwingungen wird hierdurch stark verbessert und steuernde Eingriffe können nach außen nicht mehr störend in Erscheinung treten.

Für den Gebrauchswert des erfindungsgemäßen Gummilagers ist es von entscheidender Bedeutung, daß der Durchflußquerschnitt der Drosselöffnung sehr präzise auf einen oder mehrere präzise definierte Werte eingestellt werden kann. Unter Berücksichtigung dieser Randbedingung hat es sich unter konstruktiven Gesichtspunkten bewährt, wenn für die Verstellung ein Stellglied vorgesehen ist, welches an die Drosselöffnung annäherbar ist. Eine noch bessere Einstellmoglichkeit wird demgegenüber erhalten, wenn für die Verstellung ein Stellglied vorgesehen ist, welches in die Drosselöffnung eintauchbar ist. Zweckmäßig ist für die Verstellung ein Stellantrieb vorgesehen, der signalbetätigbar durch das von dem Gummilager abgeschützte Maschinenelement steuerbar ist. Der Stellantrieb kann mechanisch, elektrisch, pneumatisch oder hydraulisch betätigbar und gegebenenfalls als Servomotor ausgelegt sein.

Die ergänzende Anbringung von Hilfsmitteln zur Entkoppelung akustisch wirksamer, hochfrequenter Schwingungen ist problemlos möglich. Entsprechende Hilfsmittel sind beispielsweise aus der DE-OS 27 27 244 bekannt.

Der Gegenstand der Erfindung wird nachfolgend anhand einer Zeichnung weiter erläutert.

In der Zeichnung ist ein Ausführungsbeispiel des erfindungsgemäßen Gummilagers gezeigt, bei dem der Durchflußquerschnitt durch ein von außen betätigbares Stellglied willkürlich veränder- und kalibrierbar ist.

In der Zeichnung ist ein Gummilager dargestellt, das insbesondere für die Lagerung eines Verbrennungsmotors in einem Kraftfahrzeug geeignet ist. Das Gummilager besteht im wesentlichen aus dem Traglager 1 und dem Auflager 2, welche durch die hohlkegelige Tragfeder 3 aus gummielastischem Werkstoff federnd aufeinander abgestützt sind und gemeinsam mit der an dem Auflager 2 festgelegten Bodenplatte 7 den Arbeitsraum 6 begrenzen. Dieser ist mit einer hydraulischen Flüssigkeit gefüllt, beispielsweise mit einem Gemisch Glykol und Wasser, und durch eine kanalartig ausgebildete Verbindungsöffnung 10 mit dem Ausgleichsraum 4 verbunden. Dieser ist nach außen durch eine flexibel ausgebildete Begrenzungswand 5 abgeschlossen und zur drucklosen Aufnahme zusätzlicher Flüssigkeitsvolumen geeignet. Ein Druckanstieg in dem Arbeitsraum 6 wird hierdurch durch das Aufbringen der während der bestimmungsgemäßen Verwendung zu tragenden Belastungen vermieden. Die Verwendung einer elastisch nachgiebigen Begrenzungswand 5 ist ebenfalls möglich.

Das Verhältnis aus dem Durchflußquerschnitt und der Länge der Verbindungsöffnung 10 ist derart mit der Blähelastizität der Tragfeder 3 abgestimmt, daß sich bei Einleitung von Schwingungen des zu bedämpfenden Frequenzbereichs eine Resonanzbewegung der in der Verbindungsöffnung 10 zwischen den beiderseitigen Mündungen enthaltenen Flüssigkeitsmasse ergibt. Diese hat eine breitbandige, hochgradige Dämpfung entsprechender Schwingungen zur Folge.

Die Festlegung der zu bedämpfenden Schwingungen kann willkürlich erfolgen. Sie umfaßt auf dem vorstehend angesprochenen Verwendungsgebiet vorzugsweise den Frequenzbereich zwischen 5 und 25 Hz.

Der kanalartig ausgebildete Teil der Verbindungsöffnung 10 ist im wesentlichen radial außerhalb des Arbeitsraumes 6 und des Ausgleichssraumes 4 angeordnet und durch unnachgiebige Wandungen des Auflagers 2 begrenzt. Sein Profil ist von rechteckiger Gestalt und im Bereich der beiderseitigen Enden radial geöffnet zum einen in Richtung des Arbeitsraumes 6 und zum anderen in Richtung des Ausgleichsraumes 4.

Der in Richtung des Arbeitsraumes 6 zur Verfügung stehende Durchtrittsquerschnitt 13 stimmt im wesentlichen mit dem Durchtrittsquerschnitt der Verbindungsöffnung 10 überein. Der sich bei Einleitung von Schwingungen in das Traglager 1 ergebende Flüssigkeitsaustausch zwischen der Verbindungsöffnung 10 und dem Arbeitsraum 6 ist dadurch im wesentlichen ungestört.

Demgegenüber ist in der Zwischenzone zwischen dem anderen Ende der Verbindungsöffnung 10 und dem Ausgleichsraum 4 eine blendenartig gestaltete, unnachgiebig begrenzte Drosselöffnung 12 vorgesehen, deren Durchschnittsquerschnitt etwa 0,25 bis 0,33 mal so groß ist wie der Durchtrittsquerschnitt der Verbindungsöffnung 10. Zusätzlich zu der auf Resonanzeffekten beruhenden Dämpfungsarbeit ergibt sich hierdurch ein weiterer Dämpfungseffekt, der erfindungsgemäß genutzt wird und die Erzielung einer ausgezeichneten Dämpfungswirksamkeit in dem gesamten, vorstehend erwähnten Frequenzbereich bewirkt.

Die Drosselöffnung 12 ist hinsichtlich ihres Durchflußquerschnitts willkürlich und gegebenenfalls in Abhängigkeit von sekundären Randbedingungen verstellbar.

Der Ausgleichsraum 4 ist in der hier gezeigten Ausführung radial außerhalb der Tragfeder 3 angeordnet und nach außen durch eine faltenbalgähnlich gestaltete Begrenzungswand 5 abgeschlossen. Die elastische Nachgiebigkeit der Begrenzungswand 5 ist vernachlässigbar gering, wodurch der Ausgleichsraum 4 zur drucklosen Aufnahme zusätzlicher Flüssigkeitsvolumina geeignet ist.

Die Verbindungsöffnung 10 ist teilweise um den Arbeitsraum 6 herumgeführt und von rechteckigem Profil. Sie ist einerseits durch Bestandteile des Auflagers 2 und andererseits der Bodenplatte 7 unnachgiebig begrenzt und im Bereich des einen Endes axial in Richtung des Arbeitsraumes 6 geöffnet.

Die Drosselöffnung 12 ist im Bereich der Überströmöffnung zwischen der Verbindungsöffnung 10 und dem Arbeitsraum 6 vorgesehen. Sie ist hinsichtlich ihres Durchflußquerschnittes verstell- und kalibrierbar durch das Stellglied 9, welches im Bereich seines vorderen Endes zunehmend verjüngt und in definierter Weise in die Drosselöffnung 12 eintauchbar ist.

Zur Durchführung einer entsprechenden Verlagerung des Stellgliedes 9 ist ein Stellantrieb 8 vorgesehen, der signalleitend betätigbar ist. Bei einfachen Anwendungsfällen kann eine entsprechende Signalbetätigbarkeit entbehrlich sein. In diesem Falle ist der Servomotor durch eine Handverstelleinrichtung ersetzt, beispielsweise eine Einstellschraube, die am vorderen Ende mit einer Drosselöffnung 12 eintauchbaren und im vorderen Bereich zugespitzten Düsennadel versehen ist.

Für die statische Abdichtung des Stellgliedes 9 gegenüber dem Auflager 2 ist bei dem dargestellten Ausführungsbeispiel eine Rollmembran 15 vorgesehen, die das Stellglied 9 im mittleren Bereich vollständig überdeckt und die im Randbereich flüssigkeitsdicht und unverrückbar in dem Auflager 2 festgelegt ist. Sie besteht aus gummielastischem Werkstoff.

## Patentansprüche

1. Gummilager mit einer hydraulischen Dämpfungseinrichtung zur Dämpfung von Schwingungen in einem vorgegebenen Frequenzbereich, umfassend ein Traglager (1) und ein Auflager (2), die durch eine Tragfeder (3) aus gummielastischem Werkstoff aufeinander abgestützt sind und einen Arbeits- (6) und eine Ausgleichsraum (4) umgrenzen, die durch eine Verbindungsöffnung (10) verbunden und mit einer hydraulischen Flüssigkeit gefüllt sind, wobei die Verbindungsöffnung (10) kanalartig gestaltet und so dimensioniert und mit der Ausbauchungselastizität der Tragfeder (3) abgestimmt ist, daß das umschlossene Flüssigkeitsvolumen bei Einleitung von Schwingungen der zu bedämpfenden Frequenz in eine Resonanzbewegung versetzbar ist und wobei die Verbindungsöffnung (10) einen Durchtrittsquerschnitt aufweist, der nur im Bereich ihrer Ein- oder Auslaßöffnung zu einer in Richtung der Resonanzbewegung kurz begrenzten Drosselöffnung (12) mit unnachgiebiger Wandung verengt ist, dadurch gekennzeichnet, daß die Drosselöffnung (12) hinsichtlich ihres Durchflußquerschnitts verstellbar ist, wobei das Verhältnis aus dem Durchflußquerschnitt der Verbindungsöffnung (10) und dem Durchflußquerschnitt der Drosselöffnung (12) 2 bis 6 beträgt.

2. Gummilager nach Anspruch 1, dadurch gekennzeichnet, daß die Drosselöffnung (12) als Blende ausgebildet ist.

3. Gummilager nach Anspruch 1 bis 2, dadurch gekennzeichnet, daß die Drosselöffnung (12) hinsichtlich ihres Durchflußquerschnittes stufenlos zwischen einem Kleinst- und einem Größtmaß kalibrierbar ist.

4. Gummilager nach Anspruch 1 bis 3, dadurch gekennzeichnet, daß für die Kalibrierung ein Stellglied (9) vorgesehen ist und daß das Stellglied (9) an die Drosselöffnung (12) annäherbar ist.

5. Gummilager nach Anspruch 1 bis 4, dadurch gekennzeichnet, daß für die Kalibrierung ein Stellglied (9) vorgesehen ist und daß das Stellglied in die Drosselöffnung (12) eintauchbar ist.

6. Gummilager nach Anspruch 1 bis 5, dadurch gekennzeichnet, daß für die Verstellung ein Stellantrieb (8) vorgesehen ist und daß der Stellantrieb (8) signalbetätigbar ist.

## Claims

1. A rubber mounting having a hydraulic damping device for damping vibrations in a pre-defined frequency range, comprising a journal mounting (1) and a support (2), which are supported one on top of the other by a suspension spring (3) made from elastomeric material and bound a working space (6) and an equalizing space (4) which are connected by a connecting opening (10) and filled with a hydraulic fluid, the connecting opening (10) being shaped like a duct and being dimensioned and matched to the bulging elasticity of the suspension spring (3) such that the enclosed volume of fluid, whenever vibrations of the frequency to be dampened are induced, can be set into resonance motion, and the connecting opening (10) exhibiting a pass-through cross-section which is constricted, only in the region of the inlet or outlet port of the said connecting opening, to. form a throttle opening (12) having an inflexible wall, which throttle opening is concisely limited in the direction of the resonance motion, characterized in that the throttle opening (12) is adjustable in terms of its through-flow cross-section, the ratio of the through-flow cross-section of the connecting opening (10) to the through-flow cross-section of the throttle opening (12) being 2 to 6.

2. A rubber mounting according to claim 1, characterized in that the throttle opening (12) is configured as a diaphragm.

3. A rubber mounting according to either of claims 1 and 2, characterized in that the throttle opening (12) can be calibrated in terms of its through-flow cross-section in continuous adjustment between a minimum and a maximum measure.

4. A rubber mounting according to any of claims 1 to 3, characterized in that a final control element (9) is provided for the calibration and in that the final control element (9) can be brought closer to the throttle opening (12).

5. A rubber mounting according to any of claims 1 to 4, characterized in that a final control element (9) is provided for the calibration and in that the final control element can be plunged into the throttle opening (12).

6. A rubber mounting according to any of claims 1 to 5, characterized in that a servo drive (8) is provided for the adjustment and in that the servo drive (8) is signal-operated.

## Revendications

1. Support en caoutchouc comportant un dispositif d'amortissement hydraulique pour l'amortissement de vibrations dans une gamme de fréquences donnée, ce support comprenant un support porteur (1) et un support d'appui (2) qui sont en appui l'un sur l'autre par l'intermédiaire d'un ressort porteur (3) constitué dans un matériau qui a l'élasticité du caoutchouc et délimitent un espace de travail (6) et une chambre de compensation (4) qui communiquent par l'intermédiaire d'une ouverture de communication (10) et sont remplies d'un liquide hydraulique, l'ouverture de communication (10) étant conçue comme un canal et ses dimensions étant adaptées au renflement élastique du ressort porteur (3) de manière à ce que, lors du déclenchement de vibrations de la fréquence à amortir, le volume de liquide enfermé puisse entrer dans un mouvement de résonance, et l'ouverture de communication (10) étant pourvue d'une section de passage qui est rétrécie, uniquement dans la région de son ouverture d'admission ou de sortie, pour donner une ouverture d'étranglement (12) à paroi non flexible et aux dimensions courtes dans la direction du mouvement de résonance, ce support en caoutchouc étant caractérisé en ce que la section de passage de l'ouverture d'étranglement (12) est réglable, le rapport obtenu à partir de la section de passage de l'ouverture de communication (10) et de la section de passage de l'ouverture d'étranglement (12) étant de 2 à 6.

2. Support en caoutchouc selon la revendication 1, caractérisé en ce que l'ouverture d'étranglement (12) est réalisée sous forme de diaphragme.

3. Support en caoutchouc selon l'une des revendications 1 à 2, caractérisé en ce que l'ouverture d'étranglement (12) peut être calibrée de manière progressive pour que sa section de passage varie entre deux grandeurs, la plus petite et la plus grande.

4. Support en caoutchouc selon les revendications 1 à 3, caractérisé en ce qu'un organe de réglage (9) est prévu pour le calibrage et en ce que l'organe de réglage (9) peut être approché de l'ouverture d'étranglement (12).

5. Support en caoutchouc selon les revendications 1 à 4, caractérisé en ce qu'un organe de réglage (9) est prévu pour le calibrage et en ce que l'organe de réglage peut être enfoncé dans l'ouverture d'étranglement (12).

6. Support en caoutchouc selon les revendications 1 à 5, caractérisé en ce qu'un vérin (8) est prévu pour le réglage et en ce que le vérin (8) peut être commandé par signaux.
